# EUROPÄISCHE PATENTANMELDUNG

(11) **EP 2 263 824 A1**
(43) Veröffentlichungstag der Anmeldung: **22.12.2010**
(21) Anmeldenummer: 09405101.8
(22) Anmeldetag: 16.06.2009
(51) Int. Cl.: B23K 26/40, B23K 26/38, G04B 13/02

(54) **Verfahren zur Herstellung von Werkstüchen aus einer Materialplatte**

(71) Anmelder: BCI Blösch Corporation Inc., 2540 Grenchen (CH)
(72) Erfinder: Blösch, Peter, 2502 Biel (CH); Dumitru, Gabriel, 5415 Nussbaumen b. Baden (CH)
(74) Vertreter: Rüfenacht, Philipp Michael

(57) **Zusammenfassung**

Die Erfindung betrifft ein Verfahren sowie eine Anlage zur Herstellung und Weiterverarbeitung von Werkstücken (1) aus einer Materialplatte mittels eines Lasers. Als erster Verfahrensschritt wird die Materialpatte auf einem Träger (3) befestigt, wobei die Befestigungsstellen (11) derart gewählt werden, dass nach dem Ausschneiden ein die Werkstücke (1) umgebender Rahmen (7) entfernt werden kann. Die Werkstücke (1) verbleiben aber am Träger (3) befestigt und können dann weiterverarbeitet, zum Beispiel beschichtet werden. Nach der Weiterverarbeitung werden die Werkstücke (1) durch mechanische, thermische oder chemische Beanspruchung vom Träger (3) gelöst. Da die Werkstücke (1) nach dem Ausschneiden auf dem Träger (3) verbleiben, müssen sie für die Weiterverarbeitung nicht mehr einzeln neu positioniert werden. Eine Anlage, welche nach dem erfindungsgemässen Verfahren Werkstücke (1) herstellt, kann den Träger (3) als ganzes transportieren und positionieren. Dies bedeutet eine effektivere Handhabung der Werkstücke (1), was zu Zeitersparnis führt und somit zu einer Senkung der Herstellungskosten der Werkstücke (1) beiträgt.

## Beschreibung

### Technisches Gebiet

Die Erfindung betrifft ein Verfahren zur Herstellung von Werkstücken aus einer Materialplatte sowie eine Anlage zur Herstellung von Werkstücken nach einem solchen Verfahren.

### Stand der Technik

Auf vielen Gebieten der Industrie, so zum Beispiel in der Uhrenindustrie oder Automobilindustrie, werden im Wesentlichen 2-dimensionale Werkstücke aus Materialplatten gefertigt. Für Loszahlen von circa 500 bis 10'000 Stück wird immer häufiger auch ein Laser zum Ausschneiden der Werkstücke aus den Materialplatten eingesetzt. Nach dem Ausschneiden der Werkstücke erfolgen dann weitere Verarbeitungsschritte, wie zum Beispiel das Aufbringen einer oder mehreren Beschichtungen.

In der Regel wird für das Ausschneiden der Werkstücke die Materialplatte derart gehalten, dass die Werkstücke entfernt werden und ein Rahmen auf einem Träger oder einer Halterung einer Schneideanlage zurückbleibt. Die Werkstücke werden gesammelt und müssen dann für die Weiterverarbeitung erneut auf einem Träger oder in einer Halterung positioniert und befestigt werden.

Das erneute Positionieren und Befestigen der Werkstücke auf einem Träger erfordert zusätzliche Zeit. Es wird eine entsprechende zusätzliche Anlage benötigt, die das Positionieren und Befestigen ausführt. Diese erhöht die Komplexität des Gesamtsystems und beansprucht zusätzlichen Raum. Die längere Herstellungszeit der Werkstücke und die zusätzlichen Anlagekomponenten führen zu erhöhten Herstellungskosten für die zu fertigenden Teile.

### Darstellung der Erfindung

Aufgabe der Erfindung ist es, ein dem eingangs genannten technischen Gebiet zugehörendes Verfahren zu entwickeln, welches die Handhabung der Werkstücke bei der Herstellung und Weiterverarbeitung einfacher und effizienter gestaltet.

Die Lösung der Aufgabe ist durch die Merkmale des Anspruchs 1 definiert. Gemäss der Erfindung umfasst das Verfahren zur Herstellung von Werkstücken aus einer Materialplatte folgende Schritte:
a) Befestigen der Materialplatte auf einem Träger;
b) Ausschneiden einzelner Werkstücke aus der Materialplatte mit einem Laser,
c) Entfernen eines Rahmens vom Träger, wobei die Werkstücke auf dem Träger verbleiben;
d) Weiterverarbeiten der auf dem Träger verbliebenen Werkstücke und
e) Entfernen der Werkstücke vom Träger.

Zudem umfasst die Erfindung eine Anlage zur Herstellung von Werkstücken aus einer Materialplatte, wobei die Anlage derart ausgebildet ist, dass die oben genannten Verfahrensschritte ausgeführt werden können.

Den Rahmen bildet ein Teil, insbesondere den zusammenhängenden Teil, der bearbeiteten Materialplatte, welcher keine Werkstücke bildet, also das komplementäre Abbild der zu fertigenden Werkstücke oder zumindest einen substanziellen Teil davon. Insbesondere umschliesst der Rahmen das Werkstück respektive die Werkstücke. Indem die Werkstücke nach dem Ausschneiden auf dem Träger verbleiben und nur der Rahmen entfernt wird, bleiben die Werkstücke gehalten und positioniert. Dies hat den Vorteil, dass der Träger zusammen mit den darauf befestigten Werkstücken als ganzes zur Weiterverarbeitung weitergeleitet werden kann. Zudem ist auch nach dem Ausschneiden die exakte Position der Werkstücke auf dem Träger bekannt, was den Vorteil hat, dass weitere spezifische Bearbeitungen an den Werkstücken direkt nach dem Ausschneiden vorgenommen werden können. Dies ermöglicht insgesamt eine effiziente und zeitsparende Handhabung der Werkstücke.

Dadurch verringert sich die gesamte Herstellungszeit der Werkstücke, da die Zeit zur erneuten Positionierung und Befestigung der Werkstücke auf einem Träger oder einer Halterung entfällt. Auch braucht es keine zusätzliche Anlage, die diese Positionierung und Befestigung vornimmt.

Mit Vorteil ist die Materialplatte nur lokal mit dem Träger verbunden, nämlich an Stellen, wo nach dem Ausschneiden Werkstücke gebildet sind, und/oder an Stellen, wo Material beim Ausschneiden der Werkstücke mit dem Laser entfernt wird. Dies ermöglicht anschliessend ein leichtes Entfernen des Rahmens, da dieser nach dem Ausschneiden der Werkstücke nun nicht mehr gehalten ist.

Alternativ kann auch der Rahmen nach dem Ausschneiden mit dem Träger verbunden bleiben. Dies kann dann von Vorteil sein, falls der Träger zusammen mit dem Rahmen und den Werkstücken noch transportiert wird bevor der Rahmen entfernt wird. Bevorzugt bleibt der Rahmen aber auch in diesem Fall nur an einigen wenigen Stellen mit dem Träger verbunden, damit er leicht entfernt werden kann.

Mit Vorteil werden die Werkstücke nach der weiteren Verarbeitung chemisch, zum Beispiel mit einem Lösungsmittel, insbesondere Aceton, vom Träger gelöst. Dies ist ein schonendes und einfaches Verfahren, um die Werkstücke vom Träger zu entfernen. Vorteilhaft ist es auch, wenn die Werkstücke nach der Verarbeitung mechanisch, zum Beispiel durch Schaben bzw. Rakeln vom Träger gelöst werden.

Alternativ ist auch vorstellbar, dass die Werkstücke thermisch vom Träger gelöst werden. Als Beispiel sei das Erwärmen der Verbindungsstellen mit einem Laser erwähnt.

Bei einer bevorzugten Ausführungsform werden die Werkstücke mechanisch mittels einer lateralen Beanspruchung, zum Beispiel durch Schaben bzw. Rakeln, vom Träger gelöst. Eine solche leichte laterale Beanspruchung ist eine einfache Methode, die Werkstücke zu lösen, insbesondere wenn die Materialplatte am Träger mittels eines Lasers befestigt wurde. Dazu kann eine laterale Kraft auf die Werkstücke ausgeübt werden.

Alternativ können die Werkstücke auch chemisch, zum Beispiel mit Lösungsmitteln, mit Säuren oder mit Laugen, vom Träger gelöst werden.

Mit Vorteil wird die Materialplatte wie folgt am Träger angebracht:
a) Zuerst wird die Materialplatte mit dem Träger in Kontakt gebracht.
b) Danach erfolgt ein lokales Erwärmen des Trägers mittels Beaufschlagung eines Lasers.

Dabei bildet sich eine Schmelze, an der die Materialplatte haften kann. Dies hat den Vorteil, dass sehr gezielt lokale Verbindungen zwischen der Materialplatte und dem Träger hergestellt werden können, die sich später dann leicht lösen lassen. In Kontakt bringen kann auch bedeuten, dass die Materialplatte auf den Träger während der Beaufschlagung des Lasers gepresst wird. Neben den Möglichkeiten, die Verbindungen nach der Verarbeitung der Werkstücke chemisch oder mechanisch zu lösen, können die Verbindungen, das heisst die Schmelze, nach der Verarbeitung der Werkstücke wieder erwärmt werden, wodurch die Werkstücke vom Träger gelöst werden.

Mit Vorteil umfasst die Anlage eine Laserquelle zur Beaufschlagung zwecks Befestigung der Materialplatte am Träger. Idealerweise ist die Anlage derart ausgelegt, dass der Laser ausser zum Befestigen auch zum Ausschneiden der Werkstücke verwendet werden kann. Je nach Ausführungsform kann es notwendig sein, Strahlengang, Charakteristik des Lasers, optisches System und/oder Position des Trägers für diese beiden Tätigkeiten jeweils anzupassen. Natürlich ist es als Variante auch möglich, für das Befestigen und das Ausschneiden zwei verschiedene Laserwerkzeuge einzusetzen.

Alternativ kann die Materialplatte auch durch Auftragen einer Haftschicht am Träger befestigt werden. Dabei kann die Haftschicht entweder auf den Träger, auf die Materialplatte oder sowohl auf den Träger als auch auf die Materialplatte aufgetragen werden. Es ist zudem möglich, dass die Haftschicht aus verschiedenen Komponenten besteht, die jeweils entweder auf den Träger oder auf die Materialplatte aufgetragen werden. Zudem ist es vorstellbar, dass der Träger anstelle der Beaufschlagung durch den Laser auch anderweitig lokal derart erwärmt werden kann, dass sich eine Schmelze bildet. Zum Beispiel könnte auch elektrisch oder mittels einer Flamme erwärmt werden.

Um beim Erwärmen Material für die Schmelze zu liefern, an der die Materialplatte haften kann, wird mit Vorteil auf dem Träger eine zusätzliche Schmelzschicht angebracht. Eine solche zusätzliche Schmelzschicht kann insbesondere aus Metall, mit Vorteil aus Aluminium, bestehen.

Alternativ kann auf eine solche zusätzliche Schmelzschicht auch verzichtet werden.

Mit Vorteil erfolgt die Beaufschlagung mit dem Laser zwecks Befestigung der Materialplatte durch den Träger hindurch. Dies hat den Vorteil, dass die Materialplatte beim Beaufschlagen mit dem Laser nicht beschädigt werden kann. Zudem ist es dadurch nicht notwendig, dass die Materialplatte für den Befestigungslaser transparent ist.

Alternativ ist es auch möglich, durch die Materialplatte hindurch die Beaufschlagung des Trägers mit dem Laser vorzunehmen. Dabei kann es notwendig sein den Befestigungslaser respektive die Laserparameter des Befestigungslasers anzupassen.

Bei einer weiteren bevorzugten Ausführungsform wird die Materialplatte wie folgt am Träger angebracht:
a) Aufbringen einer Haftschicht, insbesondere einer doppelseitigen Klebefolie, auf den Träger,
b) Aufheben der Hafteigenschaft der Haftschicht zumindest an jenen Stellen, wo der Rahmen zu liegen kommt,
c) Anpressen der Materialplatte an die auf dem Träger verbliebene Haftschicht.

Die Hafteigenschaft kann aufgehoben werden, indem zum Beispiel die Haftschicht an den entsprechenden Stellen abgedeckt wird oder auch indem die Haftschicht an den entsprechenden Stellen wieder entfernt wird. Dabei ist es möglich, dass die Haftschicht auch noch an weiteren Stellen entfernt respektive abgedeckt wird, solange gewährleistet ist, dass die Werkstücke noch genügend Klebefläche mit der Haftschicht aufweisen. Solche Haftschichten können schon auf Vorrat auf den Träger angebracht und dann je nach Gebrauch individuell wieder bearbeitet respektive entfernt werden. Als mögliche Haftschicht kann zum Beispiel eine Doppelklebefolie angebracht werden. Es sind aber auch andere Klebstoffe, zum Beispiel Abdecklack vorstellbar. Die Haftschicht kann unter anderem mit einem Druckverfahren, insbesondere Tampondruck oder Siebdruck, appliziert werden, falls sie in geeigneter Form, insbesondere in flüssiger Form, vorhanden ist.

Mit Vorteil umfasst die Anlage eine Vorrichtung zum Aufbringen einer Haftschicht auf den Träger, insbesondere einer doppelseitigen Klebefolie. Zudem ist die Anlage derart ausgebildet, dass die Haftschicht vom Träger zumindest an jenen Stellen, wo der Rahmen zu liegen kommt, entfernt werden kann, respektive ihre Hafteigenschaft aufgehoben werden kann, und danach die Materialplatte an die auf dem Träger verbliebene Haftschicht angepresst werden kann.

Alternativ ist es - wie oben erwähnt - auch möglich, durch lokales Erwärmen des Trägers eine Schmelze zu bilden, an der die Materialplatte haften kann.

Mit Vorteil wird die Haftschicht durch Beaufschlagung eines Lasers entfernt. Dies ermöglicht für jede erdenkliche Form der Werkstücke ein präzises Entfernen der Haftschicht an jenen Stellen, wo der Rahmen zu liegen kommt. Wie viel und an welchen Stellen die Haftschicht entfernt werden soll, wird vor allem durch die Grösse, die geometrische Form und die Position der Werkstücke auf der Materialplatte bestimmt. Dabei kann es möglich sein, dass nicht an allen Stellen, wo der Rahmen zu liegen kommt, die Haftschicht entfernt wird, so dass nach dem Ausschneiden der Werkstücke der Rahmen noch vom Träger gehalten wird. Auch ist es möglich, dass das Werkstück nicht über eine ganze Hauptfläche des Werkstücks noch am Träger respektive der Haftschicht gehalten wird.

Alternativ könnte die Haftschicht auch mechanisch oder chemisch, zum Beispiel mittels eines Lösungsmittels, entfernt werden. Es ist auch möglich, die Haftschicht zu Beginn nur an den gewünschten Stellen anzubringen.

Wurde die Materialplatte mit einer Haftschicht am Träger befestigt so können die Werkstücke nach der Weiterbehandlung mit einem organischen Lösungsmittel, zum Beispiel Aceton, vom Träger gelöst werden. Dies hat den Vorteil, dass die Werkstücke einfach und schonend vom Träger gelöst werden können.

Je nach verwendeter Haftschicht können die Werkstücke auch mechanisch entfernt werden.

Mit Vorteil besteht die Materialplatte aus Silizium, Keramik, insbesondere AIO- oder AIN-Keramik, oder Metall, insbesondere rostfreiem Stahl oder Edelmetallen wie zum Beispiel Gold oder Platin.

Mit Vorteil umfasst der Träger eine Glasplatte. Dies ermöglicht ein Beaufschlagen des Lasers durch den Träger hindurch. Dadurch kann verhindert werden, dass der Laser die Materialplatte beschädigt.

Alternativ kann der Träger auch eine Metall- oder Kunststoffplatte umfassen.

Mit Vorteil werden die Werkstücke nach dem Entfernen des Rahmens durch Beschichten weiter verarbeitet. Insbesondere können die Werkstücke mit einem Pulverlack, mit Teflon oder mit DLC (diamond-like carbon) beschichtet werden. Mögliche Beschichtungsverfahren schliessen PVD-, CVD- oder ECD-Beschichtungsverfahren ein. Dadurch können die Werkstücke aus einem zum Beispiel kostengünstigeren, mechanisch stabileren oder einfacher bearbeitbaren Material ausgeschnitten werden und dann durch die Beschichtung veredelt werden.

Alternativ können die Werkstücke auch anderweitig chemisch oder mechanisch weiterbearbeitet werden. Insbesondere können die Werkstücke geätzt, geschliffen, gebohrt oder gefräst werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Aufsicht eines zahnradförmigen Werkstücks;
- Fig. 2: die Beaufschlagung eines Lasers auf einen Träger und eine Materialplatte;
- Fig. 3a: Querschnitt durch den Träger und die Materialplatte mit Schmelze
- Fig. 3b: eine Aufsicht auf die Werkstücke, welche am Träger mit Schmelzpunkten befestigt sind
- Fig. 4a: Ausschneiden der Werkstücke
- Fig. 4b: eine Aufsicht auf ein Werkstück mit Schneidefläche
- Fig. 5: die ausgeschnittenen Werkstücke auf dem Träger mit einem Rahmen
- Fig. 6: die ausgeschnittene Werkstücke auf dem Träger ohne einen Rahmen
- Fig. 7: die Werkstücke auf dem Träger mit einer Beschichtung
- Fig. 8: die beschichteten Werkstücke ohne den Träger
- Fig. 9a: eine Aufsicht auf Werkstücke, welche am Träger mit Klebeflächen befestigt sind
- Fig. 9b: ein Querschnitt durch den Träger und die Materialplatte mit einer Klebefolie
- Fig. 10: Ausschneiden der Werkstücke
- Fig. 11: die ausgeschnittenen Werkstücke auf dem Träger mit einem Rahmen
- Fig. 12: die ausgeschnittenen Werkstücke auf dem Träger ohne einen Rahmen
- Fig. 13: die Werkstücke auf dem Träger mit einer Beschichtung
- Fig. 14: die beschichteten Werkstücke ohne den Träger

Grundsätzlich sind in den Figuren gleiche Teile mit gleichen Bezugszeichen versehen. Da es sich um schematische Darstellungen handelt, können keine Grössenverhältnisse aus den Zeichnungen herausgelesen werden.

### Wege zur Ausführung der Erfindung

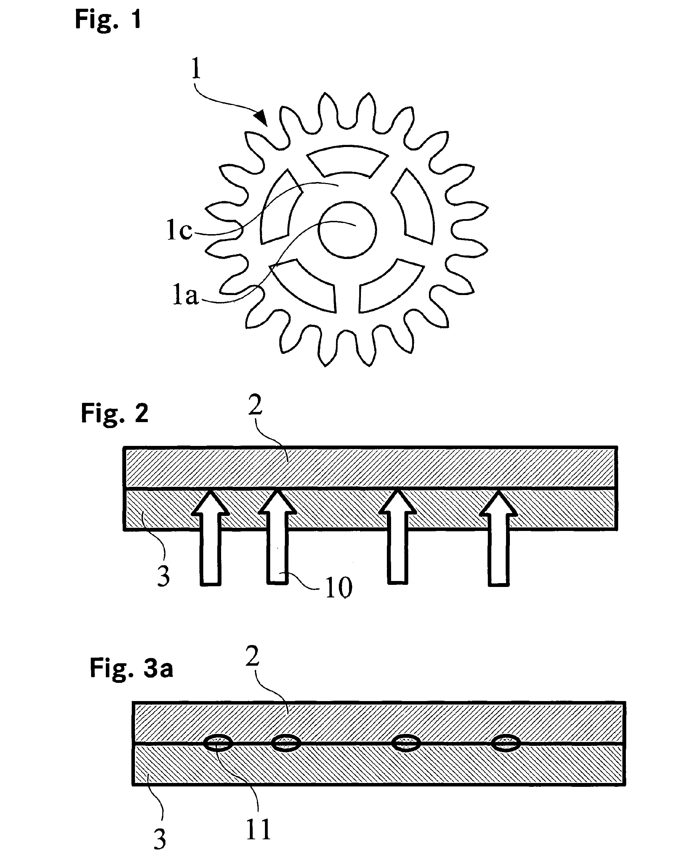

Als Anwendung des erfindungsgemässen Verfahrens werden zahnradförmige Werkstücke 1 gemäss Figur 1 aus einer Siliziumplatte 2 mit einer Dicke von 0.4 mm ausgeschnitten und anschliessend mit MoS₂ (Molybdändisulfid) beschichtet. Die Werkstücke 1 weisen einen Gesamtdurchmesser von 2.2 mm auf und besitzen im Zentrum eine kreisförmige Aussparung 1a mit einem Durchmesser von 0.4 mm. Solche zahnradförmige Werkstücke 1 werden zum Beispiel in der Uhrenindustrie eingesetzt.

In einem ersten Ausführungsbeispiel, welches in den Figuren 2 - 8 dargestellt ist, wird die Siliziumplatte 2 mit der Hilfe von Beaufschlagung eines Lasers an einer Glasplatte 3, welche als Träger dient, befestigt. Wie in der Figur 2 gezeigt wird, wird als erstes die Siliziumplatte 2 mit der Glasplatte 3 in Kontakt gebracht. Dabei wird die Siliziumplatte 2 mit einer Kraft von circa 5,5 N auf die Glasplatte 3 gedrückt. Danach erfolgt an ausgewählten Stellen einer Kontaktfläche zwischen der Glasplatte 3 und der Siliziumplatte 2 eine Beaufschlagung durch einen Befestigungslaserstrahl 10. Dieser Befestigungslaserstrahl 10 erwärmt die Glasplatte 3 und die Siliziumplatte 2 lokal, so dass sich an vorgegebenen Schmelzpunkten 11 eine dünne Schicht Schmelze bildet, wodurch die Siliziumplatte 2 an der Glasplatte 3 befestigt wird.

Die Figur 3a zeigt einen Schnitt durch die Siliziumplatte 2 und die Glasplatte 3, die durch die Schmelzpunkte 11 zusammengehalten werden. Im Detail werden die Schmelzpunkte 11 gebildet, indem die vorgegebene Fläche des Schmelzpunktes 11 mit Laserpulsen mit einem Strahldurchmesser von 80 µm Linie für Linie abgetastet wird. Die Abtastung erfolgt mit einer Geschwindigkeit von 0.1 m/s bei einem Abstand von Linie zu Linie von 10 µm. Als Laser für die Beaufschlagung zum Bilden der Schmelzpunkte 11 wird ein Q-Switch, frequenzverdoppelter Nd:YAG Laser verwendet, welcher bei einer Wellenlänge von 532 nm Licht emittiert. Der gepulste Laser hat eine Pulsdauer zwischen 15 ns und 20 ns und eine Repetitionsrate von 100 kHz. Die Beaufschlagung des Lasers erfolgt durch die Glasplatte 3 hindurch, wobei das Beaufschlagen in Luft bei einem Druck von 1 atm erfolgt. Die Stellen der Schmelzpunkte 11 sind so ausgewählt, dass die Werkstücke 1 nach dem Ausschneiden mindestens durch einen Schmelzpunkt 11 mit dem Träger verbunden sind.

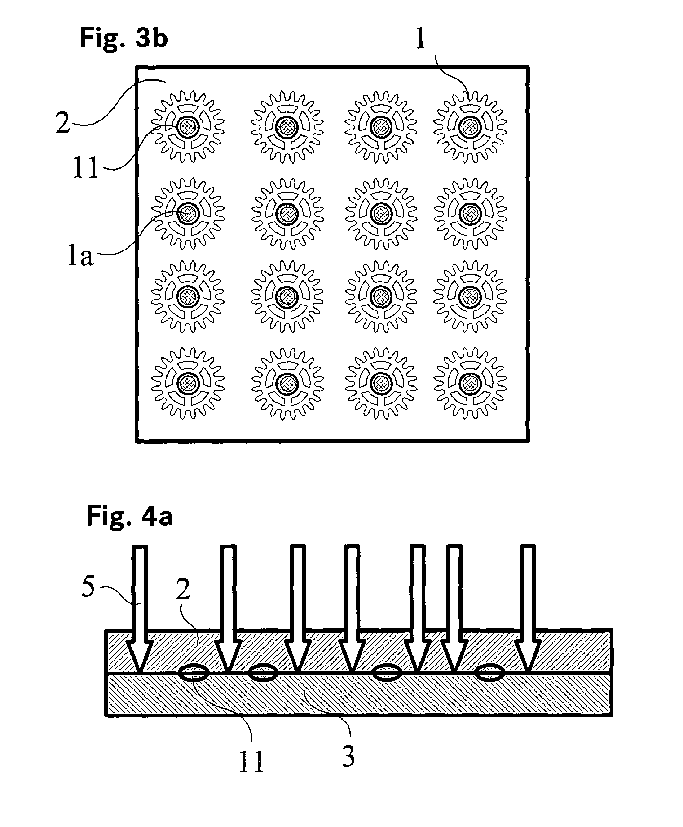

Bei den zahnradförmigen Werkstücken 1 sind die Schmelzpunkte 11 im Zentrum der Werkstücke 1 positioniert, wobei der Durchmesser der Schmelzpunkte 11 1.0 mm beträgt. In der Figur 3b sind die einzelnen Werkstücke 1 mit den dazu gehörenden Schmelzpunkten 11 dargestellt. Es ist zu beachten, dass die Schmelzpunkte 11 auch die mittige Aussparung 1a der Werkstücke 1 umfassen, welche in einem anschliessenden Verfahrensschritt entfernt wird. Dadurch dass der Durchmesser der Schmelzpunkte 11 grösser ist als der Durchmesser der Aussparung 1a wird das Werkstück 1 auch nach dem Entfernen der Aussparung 1a nach wie vor gehalten.

Nach dem Befestigen erfolgt das Ausschneiden der Werkstücke 1 aus der Siliziumplatte 2 (Figur 4a). Dazu wird der Schneidelaserstrahl 5 eines gepulsten, frequenzverdoppelten Nd:YAG Lasers verwendet, der Licht bei einer Wellenlänge von 532 nm emittiert. Die Pulsdauer des Q-switch Lasers ist circa 15 ns, die Pulsfrequenz beträgt 30 kHz und der Durchmesser des Schneidelaserstrahls 5 beträgt im Fokus circa 20 µm.

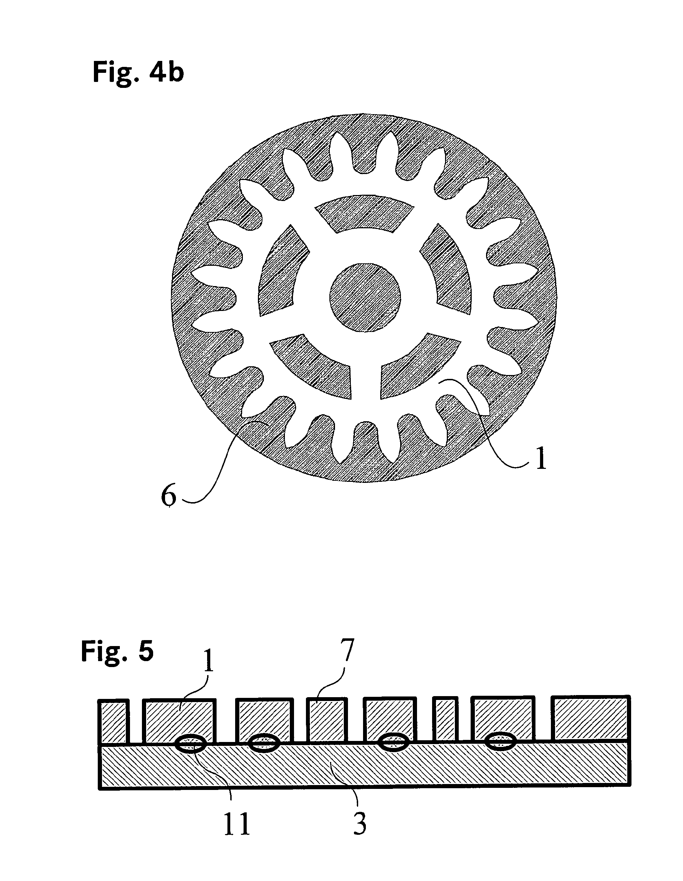

Die Werkstücke 1 werden ausgeschnitten, indem eine Schneidefläche 6 mehrmals mittels des Schneidelaserstrahls 5 Linie für Linie abgetastet wird (Figur 4b). Das Abtragen des Siliziums erfolgt dabei in drei Schritten. Zuerst wird der Schneidelaserstrahl 5 bei einer mittleren Leistung von 8.1 W beaufschlagt, wobei 54 Wiederholungen getätigt werden. Im zweiten Schritt beträgt die mittlere Leistung des Schneidelaserstrahls 5 noch 6.5 W bei 9 Wiederholungen. Im dritten Schritt beträgt die mittlere Leistung schliesslich noch 4.9 W bei ebenfalls 9 Wiederholungen. Die Abtast-Geschwindigkeit beträgt bei allen Wiederholungen 0.3 m/s. Der Abstand von Linie zu Linie beträgt 10 µm.

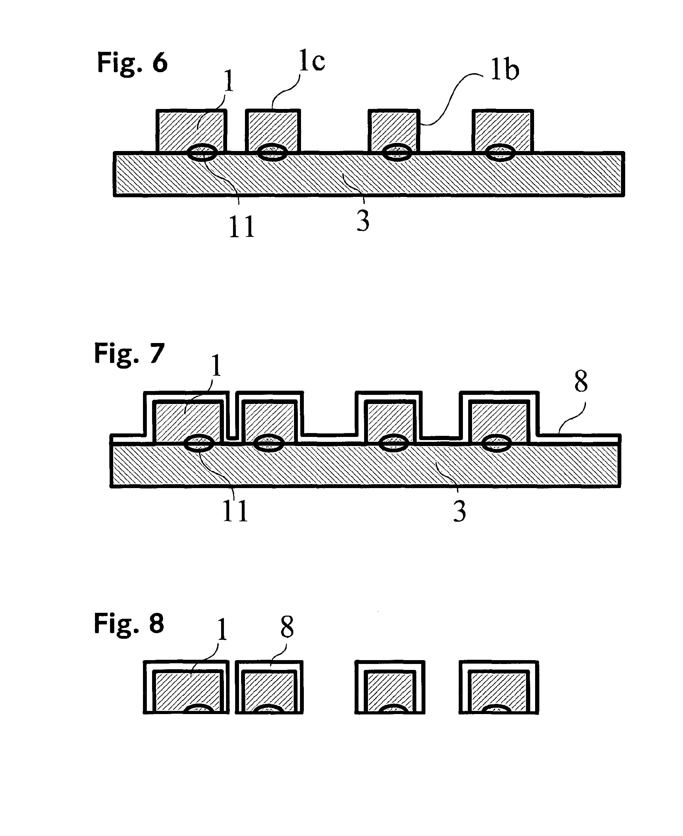

Die Figur 5 zeigt einen Schnitt durch die Glasplatte 3 und die Siliziumplatte 2 nach dem Ausschneiden der Werkstücke 1. Wie aus der Figur 5 deutlich ersichtlich ist, entsteht neben den Werkstücken 1 auch ein diese teilweise umgebender, teilweise von diesen eingeschlossener Rahmen 7, welcher aber nicht durch die Schmelzpunkte 11 mit der Glasplatte 3 verbunden ist. Wie in Figur 6 gezeigt wird, wird dieser Rahmen 7 entfernt, so dass danach nur noch die Werkstücke 1 mit der Glasplatte 3 verbunden sind. Falls der Rahmen 7 an einzelnen Stellen ebenfalls noch mit der Glasplatte 3 verbunden ist, so kann der Rahmen 7 durch eine mechanische Beanspruchung dennoch leicht entfernt werden.

Nach dem Entfernen des Rahmens 7 werden die Werkstücke 1 zur Beschichtung weiterverarbeitet. Dazu müssen die Werkstücke 1 nun nicht einzeln neu positioniert werden, da die Werkstücke 1 nach wie vor auf der Glasplatte 3 befestigt sind. Daher werden die Werkstücke 1 zusammen mit der Glasplatte 3 als Ganzes zum Beschichten weitergeleitet. Die Figur 7 zeigt die beschichteten Werkstücke 1, welche immer noch durch die Schmelzpunkte 11 auf der Glasplatte 3 befestigt sind. Wie aus der Figur 7 ersichtlich ist, wird eine Beschichtung 8 auf einer Seitenfläche 1b und auf einer der Glasplatte 3 gegenüberliegenden ersten Hauptfläche 1c der Werkstücke 1 aufgebracht. Es ist zu beachten, dass die Werkstücke 1 an einer zweiten Hauptfläche 1d zur Glasplatte 3 hin keine Beschichtung 8 aufweisen. Es gibt Anwendungen, zum Beispiel Zahnräder in der Uhrenindustrie, bei denen vor allem die Beschichtung der Seitenflächen 1 b von Bedeutung ist, da vorwiegend diese Seitenflächen 1b mechanisch stark beansprucht werden. Die beiden Hauptflächen 1c und 1d werden dagegen kaum mechanisch beansprucht.

Wie in der Figur 8 gezeigt wird, werden nach dem Beschichten die Werkstücke 1 von der Glasplatte 3 gelöst. Das Lösen der Werkstücke 1 kann zum Beispiel durch eine leichte laterale mechanische Beanspruchung, zum Beispiel durch Schaben bzw. Rackeln, erfolgen.

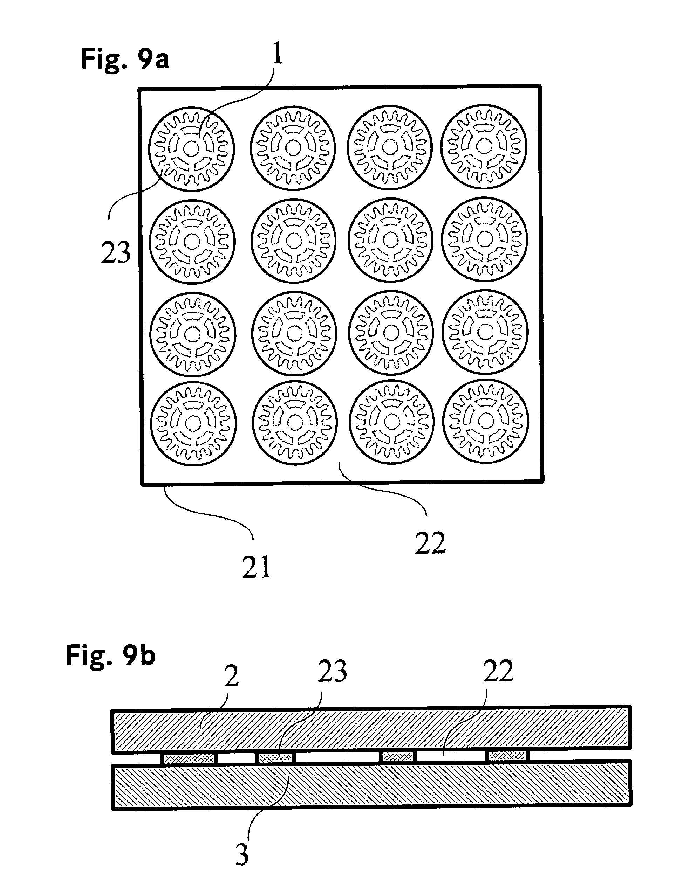

In einem zweiten Ausführungsbeispiel wird das gleiche Werkstück 1 wie im ersten Ausführungsbeispiel aus Silizium hergestellt. In den Figuren 9a bis 14 sind analog zu den Figuren 2 bis 8 für das erste Ausführungsbeispiel die einzelnen erfindungsgemässen Verfahrensschritte für das zweite Ausführungsbeispiel dargestellt. Im Unterschied zum ersten Ausführungsbeispiel wird die Siliziumplatte 2 mit der Hilfe einer doppelseitigen Klebefolie 21, welche als Haftschicht dient, mit der Glasplatte 3 verbunden. Als Klebefolie wird eine 12 µm dicke Acrylfolie (zum Beispiel DS-PET 12 my des Herstellers Ritrama S.p.A.) verwendet.

Dazu wird die Klebefolie 21 zuerst ganzseitig auf der einen Seite der Glasplatte 3 angebracht. Danach wird die Klebefolie 21 an jenen Stellen mit der Hilfe eines Lasers entfernt, an denen der Rahmen 7 zu liegen kommt. Im Fall der zahnradförmigen Werkstücke 1 bleiben nach der partiellen Entfernung einer Rahmenfläche 22 der Klebefolie 21 kreisförmige Klebeflächen 23 bestehen, wie dies in der Figur 9a gezeichnet ist.

Die Klebefolie 21 wird durch Beaufschlagung eines Lasers entfernt, wobei ein Laserstrahl die entsprechende zu entfernende Rahmenfläche 22 Line für Line abtastet. Dabei erfolgt das Abtasten in Luft bei einem Druck von 1 atm. Die Abtast-Geschwindigkeit beträgt 0.4 m/s und der Abstand von Linie zu Linie beträgt 10 µm. Als Laser wird ein Q-Switch, frequenzverdoppelter Nd:YAG Laser verwendet, der Licht bei einer Wellenlänge von 532 nm emittiert. Die Pulsdauer ist circa 15 ns, die Repetitionsrate beträgt 50 kHz und der Durchmesser des Laserstrahls im Fokus beträgt circa 20 µm. Zum Entfernen der Klebefolie 21 wird die zu entfernende Rahmenfläche 22 10-mal bei einer mittleren Leistung von 6.0 W abgetastet. Anschliessend wird die Siliziumplatte 2 an der Klebefolie 21, welche nun mehr aus den Klebeflächen 23 besteht, befestigt.

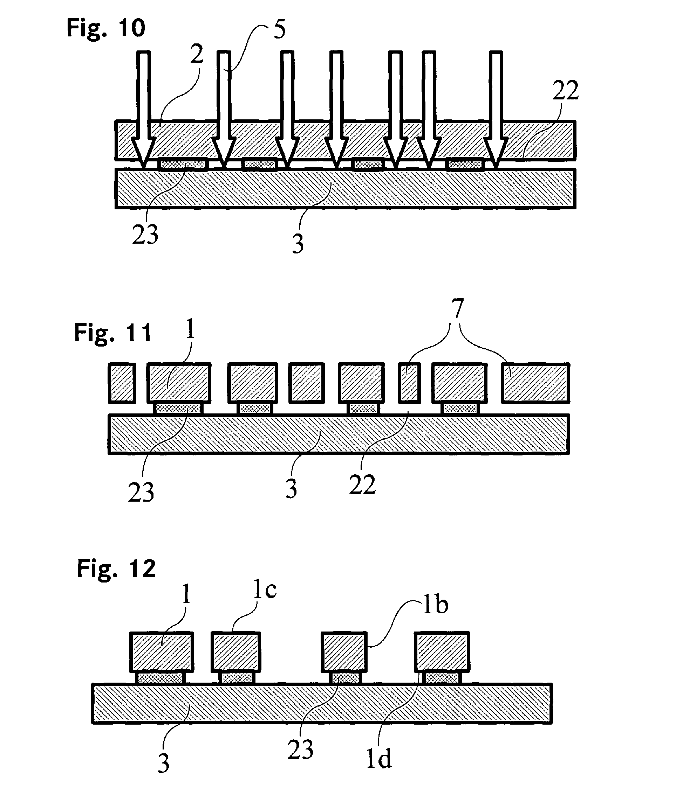

Nun erfolgt analog zum ersten Ausführungsbeispiel das Ausschneiden der Werkstücke 1 (Figur 10). Es ist zu beachten, dass beim zweiten Ausführungsbeispiel zumindest ein Teil der Schneidefläche 6 ursprünglich noch von der Klebefolie 21 gehalten wird.

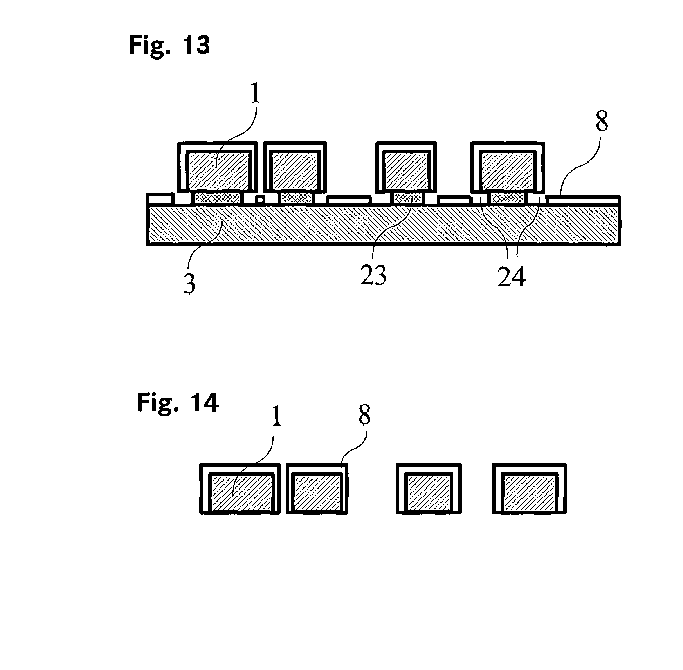

Nach dem Schneiden der Werkstücke 1 wird gemäss den Figuren 11 und 12 der Rahmen 7 entfernt. Die Werkstücke 1 bleiben dabei durch die Klebeflächen 23 mit der Glasplatte 3 verbunden. Danach werden die Werkstücke 1 analog zum ersten Ausführungsbeispiel noch mit MoS₂ beschichtet (Figur 13).

Nach der Beschichtung werden die Werkstücke 1 von der Glasplatte 3 gelöst, wozu die Glasplatte 3 zusammen mit den beschichteten Werkstücken 1 für mindestens zwei Minuten in ein Aceton-Bad gelegt wird. Dabei greift das Aceton die verbleibende Klebefolie 21 an, das heisst die Klebeflächen 23 unter den Werkstücken 1, wodurch die Klebefolie 21 aufgelöst wird und die Werkstücke 1 von der Glasplatte 3 entfernt werden. Dabei erreicht das Aceton die Klebefläche durch Unterbrüche 24 in der Beschichtung 8, welche dadurch entstehen, dass die Werkstücke 1, welche durch die Haftschicht 23 gehalten werden, etwas von der Glasplatte 3 entfernt sind. Beim Beschichten kann die Beschichtung 8 nicht unter das Werkstück 1 gelangen, wodurch in der Beschichtung 8 Unterbrüche 24 entstehen.

In einer dritten Ausführungsform dient ein galvanischer Abdecklack als Haftschicht. Der Abdecklack wird dazu mittels Tampondruck-Verfahrens an vordefinierten Kontaktstellen vorgängig auf die Glasplatte 3 aufgebracht. Danach wird die Siliziumplatte 2 an der Glasplatte 3 befestigt. Die Kontaktstellen weisen dabei eine Breite zwischen 0.5 mm und 1.0 mm und eine Dicke zwischen 10 µm und 50 µm auf. Die weiteren Verfahrensschritte entsprechen dann denen des zweiten Ausführungsbeispiels.

Die Möglichkeiten, eine Materialplatte mit einem Träger temporär zu verbinden, sind mit den drei erwähnten Ausführungsbeispielen bei weitem nicht erschöpft. Je nach verwendeten Materialien für die Werkstücke und für den Träger sind weitere temporäre Befestigungsarten vorstellbar. Je nachdem welche Weiterverarbeitung vorgesehen ist, müssen diese temporären Verbindungen unterschiedliche Bedingungen erfüllen. Für viele Beschichtungsarten ist eine Temperaturbeständigkeit bis zu einer bestimmten Höhe erforderlich. Eine Bedingung bleibt für alle temporären Verbindungsarten aber gleich: Sie müssen nach der Weiterverarbeitung wieder lösbar sein, zum Beispiel durch mechanische, thermische oder chemische Beanspruchung, zumindest ohne dass dadurch die Werkstücke, idealerweise auch nicht der Träger, beschädigt werden.

Es ist vorstellbar, dass zum Beispiel direkt Klebstoffe als Haftschicht auf den Träger aufgebracht werden. Diese Klebstoffe können dann zum Beispiel auch durch UV-Bestrahlung oder andere Bestrahlungsarten ausgehärtet werden. Dabei können die Klebstoffe zuerst ganzflächig auf dem Träger aufgebracht werden und dann nur an den vorgesehenen Klebeflächen ausgehärtet werden. Es ist aber auch möglich, die Klebstoffe schon zu Beginn nur an den vorgesehenen Klebeflächen aufzubringen.

Anstelle der 12 µm dicken Acrylfolie sind auch andere Materialien als Klebefolie respektive als Haftschicht vorstellbar. Mit Vorteil ist die Haftschicht bis 100°C, insbesondere bis 400°C, idealerweise bis 450°C, temperaturbeständig. Zudem sollte die Haftschicht idealerweise nicht dicker als 20 µm sein, damit das Ablösen der Werkstücke vom Träger nicht zu lange dauert. Zudem ist die Haftschicht idealerweise für organische Lösungsmittel wie zum Beispiel Aceton oder Ethanol löslich.

Im Allgemeinen empfiehlt es sich bei kreisförmigen Werkstücken, die Schmelzpunkte im Zentrum zu platzieren. Für kreisförmige Werkstücke, deren Durchmesser ungefähr 3 mm oder kleiner ist, ist ein Schmelzpunkt, mit einem Durchmesser von 1.0 mm, pro Werkstück 1 ausreichend. Ein solcher Schmelzpunkt kann ein 0.4 mm dickes Werkstück aus Silizium mit einer Fläche von circa 20 mm² sicher auf einer Glasplatte halten.

Bei grösseren oder bei nicht kreisförmigen Werkstücken, zum Beispiel bei länglichen Werkstücken, sind zusätzliche respektive alternative Stellen für die Schmelzpunkte zu finden.

Anstelle den Träger zuerst auf der ganzen Fläche mit der Haftschicht zu bedecken und dann die entsprechenden Stellen der Haftschicht nachträglich zu entfernen, ist es auch möglich, die Haftschicht partiell an den vorgesehenen Klebeflächen auf den Träger aufzubringen. So ist es zum Beispiel vorstellbar, im zweiten Ausführungsbeispiel direkt kreisförmige Teile der Klebefolie vorgängig auf der Glasplatte aufzubringen, bevor die Siliziumplatte daran befestigt wird.

Anstelle von Silizium können auch Werkstücke aus anderen Materialen mit dem erfindungsgemässen Verfahren hergestellt werden. In Frage kommen grundsätzlich Materialien, die als Festkörper in gerollter oder flacher Form vorliegen, zum Beispiel Keramiksubstrate oder Metallfolien, insbesondere AIO- oder AIN-Keramiken oder rostfreier Stahl oder Edelmetalle wie zum Beispiel Gold oder Platin.

Anstelle des Q-Switch, frequenzverdoppelten Nd:YAG Lasers können je nach verwendeten Materialien und gewünschten Geometrien auch andere Laser eingesetzt werden. Zum Beispiel kann ein Nd:YAG Laser, welche bei der Grundwellenlänge von 1064 nm Licht emittiert, oder ein CO₂-Laser sowohl für das Bilden der Schmelze, Entfernen der Klebefolie oder der Haftschicht, als auch für das Ausschneiden der Werkstücke verwendet werden. Die oben angegebenen Verfahrensparameter, zum Beispiel hinsichtlich der Anzahl Wiederholungen, der eingesetzten Leistung, des Strahldurchmessers oder der Linienabstände, sind als Beispiele zu verstehen und können in Abhängigkeit des verwendeten Lasers, des zu bearbeitenden Materials oder anderer Umstände variiert werden. Zudem ist es möglich, für das Befestigen und für das Schneiden denselben Laser zu verwenden, wobei die Laserparameter je nach Bedingungen gleich oder unterschiedlich sein können, als auch für das Befestigen und das Schneiden verschiedene Laser einzusetzen.

Die Bearbeitung der Werkstücke, insbesondere das Ausschneiden, kann auch in einer abgeschlossenen Bearbeitungskammer ausgeführt werden. Grundsätzlich sind alle bekannten Verfahren zum Ausschneiden von Werkstücken aus Materialplatten mit der Hilfe von Laser anwendbar. Dazu gehört ebenfalls das Bearbeiten, insbesondere das Schneiden, mit ultrakurzen Laserpulsen, deren Pulslänge sich sowohl im Piko-Sekunden als auch im Femto-Sekunden Bereich bewegen kann.

Auch wenn 2-dimensionale Werkstücke aus den Materialplatten ausgeschnitten werden, können diese zum Beispiel durch Biegen, Abkanten oder Krümmen danach derart weiterverarbeitet werden, so dass 3-dimensionale Werkstücke gebildet werden.

In den Ausführungsbeispielen wurden mehrere Zahnräder der gleichen Form aus derselben Materialplatte ausgeschnitten. Dies ist in keiner Weise einschränkend zu verstehen. So können grundsätzlich alle Werkstückformen, welche mit einem Laser ausgeschnitten werden können, hergestellt werden. Zudem ist es auch möglich, verschiedene Werkstückformen aus der gleichen Materialplatte herzustellen.

Neben dem Ausschneiden können noch andere Bearbeitungen der Werkstücke mittels eines Lasers vorgenommen werden. Dies kann insbesondere das Anbringen von Rampen oder Stufen oder das Anfertigen von Strukturen auf einer Oberfläche der Materialplatte, zum Beispiel Vertiefungen oder Beschriftungen, umfassen. Diese Art von Bearbeitungen der Werkstücke mittels eines Lasers kann sowohl vor, während als auch nach dem Schneiden erfolgen.

Zusammenfassend ist festzustellen, dass durch die Erfindung ein Verfahren und eine Vorrichtung zur Durchführung des Verfahrens geschaffen werden, welche die Herstellung und Weiterverarbeitung von Werkstücken aus einer Materialplatte effizienter und einfacher gestaltet.

## Patentansprüche

1. Verfahren zur Herstellung von Werkstücken (1) aus einer Materialplatte (2), welches folgende Schritte umfasst:
a) Befestigen der Materialplatte (2) auf einem Träger (3);
b) Ausschneiden einzelner Werkstücke (1) aus der Materialplatte (2) mit einem Laser (5),
c) Entfernen eines Rahmens (7) vom Träger (3), wobei die Werkstücke (1) auf dem Träger (3) verbleiben;
d) Weiterverarbeiten der auf dem Träger (3) verbliebenen Werkstücke (1) und
e) Entfernen der Werkstücke (1) vom Träger (3).

2. Verfahren nach Anspruch 1, **dadurch gekennzeichnet, dass** die Materialplatte (2) nur lokal mit dem Träger (3) verbunden ist, und zwar an Stellen wo nach dem Ausschneiden Werkstücke (1) gebildet sind.

3. Verfahren nach einem der Ansprüche 1 oder 2, **dadurch gekennzeichnet, dass** das Entfernen der Werkstücke (1) vom Träger (3) chemisch und/oder mechanisch erfolgt.

4. Verfahren nach Anspruch 3, **dadurch gekennzeichnet, dass** die Werkstücke (1) nach der Weiterverarbeitung mittels einer mechanischen, lateralen Beanspruchung vom Träger (3) gelöst werden.

5. Verfahren nach einem der Ansprüche 1 bis 4, **dadurch gekennzeichnet, dass** die Materialplatte (2) am Träger (3) mit folgenden Schritten angebracht wird:
a) in Kontakt bringen der Materialplatte (2) mit dem Träger (3) und
b) lokales Erwärmen des Trägers (3) mittels Beaufschlagung eines Lasers (10), wobei sich eine Schmelze (11) bildet, an der die Materialplatte (2) haften kann.

6. Verfahren nach Anspruch 5, **dadurch gekennzeichnet, dass** der Träger (3) eine zusätzliche Haftschicht aufweist, welche beim Erwärmen die Schmelze (11) bildet, an der die Materialplatte (2) haften kann.

7. Verfahren nach einem der Ansprüche 5 oder 6, **dadurch gekennzeichnet, dass** die Beaufschlagung mit dem Laser (10) durch den Träger (3) hindurch erfolgt.

8. Verfahren nach einem der Ansprüche 1 bis 4, **dadurch gekennzeichnet, dass** die Materialplatte (2) am Träger (3) mit folgenden Schritten angebracht wird:
a) Aufbringen einer Haftschicht (21), insbesondere einer doppelseitigen Klebefolie, auf den Träger (3),
b) Aufheben der Hafteigenschaft der Haftschicht (21) zumindest an jenen Stellen, wo der Rahmen (7) zu liegen kommt,
c) Anpressen der Materialplatte (2) an die auf dem Träger (3) verbliebene Haftschicht (21).

9. Verfahren nach Anspruch 8, **dadurch gekennzeichnet, dass** die Haftschicht (21) durch Beaufschlagung eines Lasers entfernt wird.

10. Verfahren nach einem der Ansprüche 8 oder 9, **dadurch gekennzeichnet, dass** nach der Weiterbehandlung die Werkstücke (1) mit einem organischen Lösungsmittel, zum Beispiel Aceton, vom Träger gelöst werden.

11. Verfahren nach einem der Ansprüche 1 bis 10, **dadurch gekennzeichnet, dass** der Träger (3) eine Glasplatte umfasst.

12. Verfahren nach einem der Ansprüche 1 bis 11, **dadurch gekennzeichnet, dass** die Werkstücke (1) nach dem Entfernen des Rahmens (7) durch Beschichten weiter verarbeitet werden.

13. Anlage zur Herstellung von Werkstücken aus einer Materialplatte (2) mit einem Verfahren aus einem der Ansprüche 1 bis 12, wobei die Anlage derart ausgebildet ist, dass folgende Schritte ausführt werden können:
a) Befestigen der Materialplatte (2) auf einem Träger (3);
b) Ausschneiden einzelner Werkstücke (1) aus der Materialplatte (2) mit einem Laser (5),
c) Entfernen eines Rahmens (7) vom Träger (3), wobei die Werkstücke (1) auf dem Träger (3) verbleiben;
d) Weiterverarbeiten der auf dem Träger (3) verbliebenen Werkstücke (1) und
e) Entfernen der Werkstücke (1) vom Träger (3).

14. Anlage nach Anspruch 13, **dadurch gekennzeichnet**, das eine Laserquelle (10) vorhanden ist, der den Träger lokal erwärmt, damit sich eine Schmelze (11) bildet, an der die Materialplatte (2) haften kann.

15. Anlage nach Anspruch 13, **dadurch gekennzeichnet, dass**
a) eine Haftschicht (21), insbesondere einer doppelseitigen Klebefolie, auf den Träger (3) aufgebracht wird,
b) Aufheben der Hafteigenschaft der Haftschicht (21) zumindest an jenen Stellen, wo der Rahmen (7) zu liegen kommt, entfernt wird und
c) die Materialplatte (2) an die auf dem Träger (3) verbliebene Haftschicht (21) angepresst wird.
